Europäisches Patentamt

European Patent Office

Office européen des brevets

(11) Veröffentlichungsnummer: **0 329 855 B1**

(19)

(12) **EUROPÄISCHE PATENTSCHRIFT**

(45) Veröffentlichungstag der Patentschrift: **19.02.92**

(51) Int. Cl.⁵: **F16H 7/12**

(21) Anmeldenummer: **88121748.3**

(22) Anmeldetag: **28.12.88**

(54) **Spannvorrichtung für einen Zahnriemen.**

(30) Priorität: **20.02.88 DE 3805310**

(43) Veröffentlichungstag der Anmeldung:
**30.08.89 Patentblatt 89/35**

(45) Bekanntmachung des Hinweises auf die
Patenterteilung:
**19.02.92 Patentblatt 92/08**

(84) Benannte Vertragsstaaten:
**DE FR GB IT SE**

(56) Entgegenhaltungen:
**DE-A- 1 725 015**
**DE-A- 2 008 472**
**FR-A- 1 078 420**
**GB-A- 2 135 017**
**US-A- 4 249 425**

(73) Patentinhaber: **Dr.Ing.h.c. F. Porsche Aktiengesellschaft**
**Porschestrasse 42**
**W-7000 Stuttgart 40(DE)**

(72) Erfinder: **Krauss, Thomas, Dipl.-Ing.**
**Haldenstrasse 15**
**W-7446 Oberboihingen(DE)**
Erfinder: **Schulze, Heinz**
**Geranienstrasse 14**
**W-7022 Leinfelden-Echterdingen(DE)**

**Beschreibung**

Die Erfindung betrifft eine Spannvorrichtung für einen Zahnriemen oder eine Kette einer Brennkraftmaschine nach dem Oberbegriff des Anspruchs 1.

Eine derartige Spannvorrichtung ist aus DE-C 33 04 543 bekannt. Mit ihr wird eine Spannrolle über ein in einem Spannergehäuse längsbeweglich geführtes Druckelement an einen Zahnriemen angedrückt. Die Anpreßkraft auf das Druckelement wird durch mehrere wechselsinnig geschichtete Pakete von Bimetall-Tellerfedern erzeugt, die sich an einem hydraulischen Dämpfungskolben des Spannergehäuses abstützen. Bei zu niedriger Riemenspannung schaltet ein im Druckelement eingesetzter elektrischer Kontakt eine Anzeigeleuchte ein, die dazu auffordert, die Riemenvorspannung durch manuelles Betätigen einer den Dämpfungskolben verschiebenden Nachstellschraube anzuheben. Wird diese Spannvorrichtung für den die Kurbelwelle und die Nockenwellen eines 4-Ventil-Motors umschlingenden Zahnriemen verwendet, so ist wegen der hohen Riemenbelastung und der dadurch bedingten Riemenlängung- und Abnutzung ein sehr häufiges Nachspannen erforderlich.

Es ist die Aufgabe der Erfindung, eine solche Spannvorrichtung in der Weise weiterzuentwickeln, daß sie weitgehend wartungsfrei ist und daß eine selbsttätige Riemennachspannung erfolgt.

Zur Lösung dieser Aufgabe dienen die kennzeichnenden Merkmale des Anspruchs 1. Wenn am Dämpfungskolben ein von außerhalb mit Hydraulikdruck beaufschlagter Vorschubkolben anliegt und die jeweilige Vorschublage des Dämpfungskolbens durch eine mechanische Rückhaltevorrichtung arretiert ist, läßt sich die Spannung des Zahnriemens selbsttätig auf einfache Weise nachstellen.

In einer bevorzugten Ausführungsform der Erfindung dient als Rückhaltevorrichtung eine Spindel, die in Schraubengänge mit hoher Steigung des Vorschubkolbens eingreift und an ihrer anderen Seite über einen Freilauf im Spannergehäuse gelagert ist. Beim hydraulischen Vorschieben des verdrehsicher längsgeführten Vorschubkolben wird die Spindel um ein entsprechendes Maß gedreht. Der Freilauf ist so eingebaut, daß er die Vorwärtsdrehung zuläßt und ein Rückdrehen sperrt, so daß die jeweilige Schiebelage des Vorschubkolbens und die Höhe der Riemenverspannung auch bei abgesenktem Hydraulikdruck erhalten bleibt. Diese Maßnahme ist vorallem dann erforderlich, wenn als Hydraulikdruck der Schmieröldruck der Brennkraftmaschine verwendet wird, der in dem Druckregelventil auf 3 bis 4 bar reduziert wird. Bei stillgesetzter Brennkraftmaschine wirkt dann auf den Dämpfungskolben allein die Rückhaltevorrichtung ein, die beim Wiederanlassen der Brennkraftmaschine eine ausreichende Riemenspannung gewährleistet.

Ein Ausführungsbeispiel der Erfindung ist in der Zeichnung dargestellt und wird nachfolgend erläutert.

Es zeigen:

Fig. 1     Riemenspannvorrichtung im Längsschnitt,

Fig. 2     Druckelement, vergrößert dargestellt,

Fig. 3     Querschnitt nach Linie 111-111 der Fig. 1, vergrößert dargestellt.

Außen auf einem Spannergehäuse 1 ist ein Rollbalg 2 befestigt, dessen anderes Ende mit einem Druckelement 3 verbunden ist, das über einen Spannrollenträger 4 und eine, an ihm drehbar gelagerte Rolle 5 einen Zahnriemen 6 unter Spannung hält. Die Spannrolle 5 wird an die Außenseite 6' des Zahnriemens 6 angedrückt, an seiner Innenseite 6" rollt eine Beruhigungsrolle 7 ab, deren Lagerstelle 8 annähernd rechtwinklig zur Achse 9 des Druckelementes liegt.

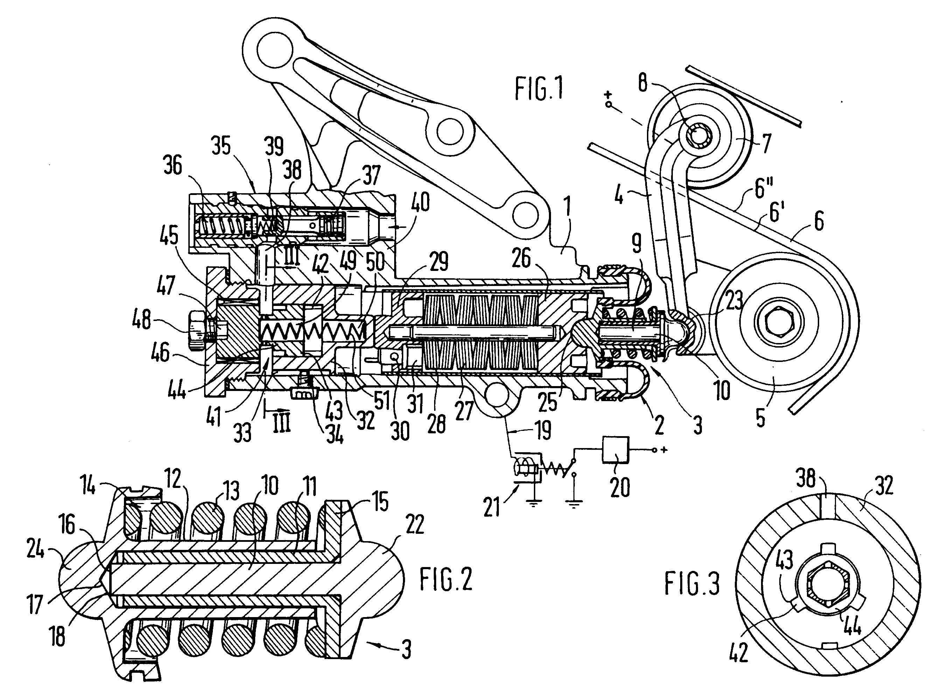

Wie Fig. 2 deutlicher zeigt, besteht das Druckelement 9 aus einem Kontaktstift 10, einer auf ihm zentrierten und befestigten Isolierhülse 11, die in einer Kontakthülse 12 längsgeführt ist, und einer Druckfeder 13, die zwischen einer Ausdrehung 14 der Kontakthülse und einem Bund 15 der Isolierhülse 11 unter Vorspannung eingelegt ist. Der elektrisch leitende Kontaktstift 10 liegt mit seiner Stirnfläche am kegeligen Grund 17 der elektrisch leitenden Kontakthülse 12 an und bildet mit ihm zusammen eine Kontaktstelle 18, mit der ein Stromkreis 19 mit einem Relais 21 steuerbar ist. Wird das Relais 21 stromlos, so wird ein Signal auf ein Anzeigegerät 20 gegeben.

Der Kontaktstift 10 weist einen Kugelkopf 22 auf, der in einer Kugelkalotte 23 des Spannrollenträgers 4 anliegt. Koaxial hierzu liegt ein Kugelkopf 24 der Kontakthülse 12 in einer Kugelkalotte 25 eines Kolbens 26, der in dem Spannergehäuse 1 längsgeführt ist und sich gegen mehreren Pakete 27 von Bimetall-Tellerfedern 28 abstützt. Je fünf Bimetall-Fellerfedern 28 sind mit ihren konvexen Seiten zu einem Paket aneinander geschichtet. Je zwei solcher Pakete 27 liegen mit ihren konkaven Seiten aneinander und bilden ein Federpaar. Durch die Bimetall-Tellerfedern 28 wird die temperaturbedingte Änderung der Zahnriemenlänge und der Zahnriemenspannung ausgeglichen.

Die Gesamtheit der Pakete 27 stützt sich gegen einen im Spannergehäuse 1 zentrierten Dämpfungskolben 29 ab, der einen durch ein Rückschlagventil 30 verschließbaren, durchgehenden axialen Ölkanal 31 enthält. Stirnseitig liegt am Dämpfungskolben 29 ein Vorschubkolben 32 an. Der Vorschubkolben 32 ist im Spannergehäuse 1 längsgeführt und mit einem in seine Längsnut 33 eingreifenden, im Spannergehäuse radial eingeschraubten Gewindezapfen 34 gegen Verdrehen gesichert. Der Vorschubkolben 32 ist über ein Druckregelventil 35 mit Hydraulikdruck beaufschlagbar. Hierzu enthält das Druckregelventil einen durch eine Schraubenfeder 36 belasteten Regelschieber 37, der einen zum Vorschubkolben 32 führenden Druckkanal 38 steuert. In den Druckkanal 38 ist zusätzlich ein federbelastetes Rückschlagventil 39 eingebaut. Das Ventilgehäuse 40 des Druckregelventils 35 ist am Spannergehäuse 1 angegossen. Das Druckregelventil 35 ist an den Schmierölkreislauf der Brennkraftmaschine angeschlossen und vermindert den Öldruck auf ca. 3,5 bar.

Die jeweilige Vorschublage des Vorschubkolbens 32 wird durch eine Rückhaltevorrichtung 41 gesichert. Hierzu ist der Vorschubkolben 32 hohl gebohrt und enthält ein Innengewinde 42 hoher Steigung, das mit einem Außengewinde 43 einer in den Vorschubkolben 32 hineinragenden Spindel 44 zusammenwirkt. Am anderen Ende ist die Spindel 44 in einem Frei lauf 45 gelagert, der in eine am Spanngehäuse 1 angeschraubte Verschlußmutter 46 eingepreßt ist.

Zentrisch in der Verschlußmutter ist ein Verstellbolzen 47 drehbar befestigt, der in eine Ausnehmung der Spindel formschlüssig eingreift und mit einem Sechskantkopf 48 versehen ist. Mit ihm läßt sich die Spindel 44 manuell verdrehen, der Vorschubkolben 32 gegen den Dämpfungskolben 29 und die Bimetall-Tellerfedern 28 verspannen und so die Riemenspannung manuell einstellen. In zentrische Bohrungen 49 und 50 der Spindel 44 und des Vorschubkolbens 32 ist eine Druckfeder 51 unter Vorspannung eingelegt. Sie dient dazu, die Spreizung zwischen der Spindel 44 und dem Vorschubkolben 32 zu gewährleisten und damit die radiale Verdrehung zu bewerkstelligen. Der die Spindel 44 aufnehmende Frei lauf 45 sorgt für eine spielfreie Radiallagerung und eine präzise Arretierung in jeder Vorschublage.

Störungen der Riemenspannvorrichtung werden mit einer elektrischen Kontrollvorrichtung überwacht. Solange die Spannung des Zahnriemens hoch genug ist, wird die Druckfeder 13, die auf eine Endkraft von 400 N ausgelegt ist, soweit zusammengedrückt, daß die Stirnfläche 16 des Kontaktstifts 10 an dem kegeligen Grund 17 der Kontakthülse 12 anliegt. Über die so geschlossene Kontaktstelle 18 fließt Strom über den aus dem Spannrollenträger 4, dem Druckelement 3, dem Kolben 26, dem Spannergehäuse 1 und dem Relais 21 gebildeten Stromkreis 19 an Masse. Das Anzeigegerät spricht hierbei nicht an. Bevor die Spannung des Zahnriemens 6 soweit abgesunken ist, daß ein Überspringen um einen Zahn zu befürchten ist, öffnet die Druckfeder 13 die Kontaktstelle 18 und unterbricht den Stromkreis 19. Das Relais 21 fällt ab und löst so ein Schaltsignal an dem Anzeigegerät 20 aus, das ein optisches oder akustisches Warnsignal gibt und auf die mangelhafte Riemenspannung aufmerksam macht.

Anstelle des Anzeigeräts 20 kann auch eine elektrische Pumpe treten, die Hydrauliköl zu dem Druckregelventil 35 fördert.

**Patentansprüche**

1.  Spannvorrichtung für einen Zahnriemen (6) oder eine Kette einer Brennkraftmaschine, mit einer Spannrolle, die über ein in einem Spannergehäuse (1) längsbewegliches Druckelement (3) an den Zahnriemen angedrückt ist, wobei die Anpreßkraft auf das Druckelement durch mehrere, wechselsinnig geschichtete Bimetall-Tellerfedern (28) ausgeübt wird, die sich gegen einen hydraulischen Dämpfungskolben (29) abstützen, dadurch gekennzeichnet, daß am Dämpfungskolben (29) ein Vorschubkolben (32) anliegt, der im Spannergehäuse (1) verdrehgesichert längsgeführt ist, von außen über ein Druckregelventil (35) mit Hydraulikdruck beaufschlagt ist und in der jeweiligen Vorschublage durch eine mechanische Rückhaltevorrichtung (41) gesichert ist.

2.  Spannvorrichtung nach Anspruch 1, dadurch gekennzeichnet, daß die Rückhaltevorrichtung (41) aus einer mit einem Innengewinde des Vorschubkolbens (32) zusammenwirkenden Spindel (44) und einem sie im Spannergehäuse (1) lagernden Frei lauf (45) besteht.

3.  Spannvorrichtungen nach Anspruch 2, dadurch gekennzeichnet, daß die Spindel (44) an ihrer einen Seite in den hohlgebohrten Vorschubkolben hineinragt, an ihrer anderen Seite in dem Freilauf (45) gelagert ist, der in eine stirnseitig an das Spannergehäuse (1) eingeschraubte Verschlußmutter (46) eingepreßt ist.

4.  Spannvorrichtung nach Anspruch 3, dadurch gekennzeichnet, daß in zentrale Bohrungen (49, 50) der Spindel (44) bzw. des Vorschubkolbens (32) eine Druckfeder (51) unter Vorspannung eingelegt ist.

5.  Spannvorrichtung nach Anspruch 1, dadurch gekennzeichnet, daß das Druckregelventil (35) ein Rückschlagventil (39) enthält.

6.  Spannvorrichtung nach Anspruch 3, dadurch gekennzeichnet, daß zentral in der Verschlußmutter (46) ein in die Spindel (44) formschlüssig eingreifender Verstellbolzen (47) drehbar befestigt und von außen manuell verstellbar ist.

7.  Spannvorrichtung nach Anspruch 1, dadurch gekennzeichnet, daß das Druckregelventil (35) an den Schmierölkreislauf der Brennkraftmaschine angeschlossen ist.

8. Spannvorrichtung nach Anspruch 1 und 5, dadurch gekennzeichnet, daß der Hydraulikdruck von einer Pumpe erzeugt wird, die durch einen im Druckelement (3) angebrachten elektrischen Kontakt (18) einschaltbar ist.

**Claims**

1. A tensioning device for a toothed belt (6) or a chain of an internal combustion engine, having a tensioning roller pressed against the toothed belt by way of a pressure member (3) movable longitudinally in a tensioner housing (1), the pressing force being exerted upon the pressure member by way of a plurality of bimetallic cup springs (28) which are alternately layered and which rest against an hydraulic damping piston (29), characterized in that a feed piston (32), guided longitudinally and non-rotatably in the tensioner housing (1), rests against the damping piston (29), is acted upon with hydraulic pressure from the outside by way of a pressure-regulating valve (35) and is secured in the respective feed position by a mechanical retaining device (41).

2. A tensioning device according to Claim 1, characterized in that the retaining device (41) comprises a spindle (44) cooperating with an internal thread of the feed piston (32) and a freewheel (45) supporting it in the tensioner housing (1).

3. A tensioning device according to Claim 2, characterized in that the spindle (44) projects at one of its ends into the hollow bored feed piston and is mounted at its other end in the freewheel (45) which is pressed into a lock nut (46) screwed into the front face of the tensioner housing (1).

4. A tensioning device according to Claim 3, characterized in that a compression spring (51) is inserted under pre-compression into central bores (49, 50) in the spindle (44) and in the feed piston (32) respectively.

5. A tensioning device according to Claim 1, characterized in that the pressure-regulating valve (35) contains a return valve (39).

6. A tensioning device according to Claim 3, characterized in that a displacement bolt (47) engaging with positive locking in the spindle (44) is secured rotatably in the centre of the lock nut (46) and is manually adjustable from the outside.

7. A tensioning device according to Claim 1, characterized in that the pressure-regulating valve (35) is connected to the lubricating-oil circuit of the internal combustion engine.

8. A tensioning device according to Claim 5, characterized in that the hydraulic pressure is produced by a pump actuable by an electrical contact (18) mounted in the pressure member (3).

**Revendications**

1. Dispositif de tension pour une courroie crantée (6) ou une chaîne d'un moteur à combustion interne, comportant une poulie de tension qui est pressée contre la courroie crantée, par un élément de pression (3) mobile longitudinalement dans un boîtier de tendeur (1), la force de pression s'exerçant sur l'élément de pression provenant de plusieurs ressorts à disque bimétalliques (28), empilés en sens contraire, qui prennent appui contre un piston d'amortissement (29) hydraulique, caractérisé en ce que contre le piston d'amortissement (29) s'applique un piston d'avance (32) qui est guidé longitudinalement dans le boîtier de tendeur (1), de manière à ne pas pouvoir tourner, qui est alimenté en pression hydraulique de l'extérieur par une vanne de régulation de pression (35) et qui est bloqué dans la position d'avance respective par un dispositif de retenue (41) mécanique.

2. Dispositif de tension selon la revendication 1, caractérisé en ce que le dispositif de retenue (41) est constitué par une broche (44) coopérant avec un taraudage du piston d'avance (32) et par une roue libre (45) montée dans le boîtier de tendeur (1).

3. Dispositif de tension selon la revendication 2, caractérisé en ce que la broche (44) s'engage par l'un de ses côtés dans le piston d'avance foré creux, en ce qu'elle est montée par son autre côté dans la roue libre (45) qui est pressée dans un écrou de fermeture (46), vissé frontalement sur le boîtier de tendeur (1).

4. Dispositif de tension selon la revendication 3, caractérisé en ce qu'un ressort de pression (51) est placé sous précontrainte dans des alésages (49, 50) centraux de la broche (44) ou du piston d'avance (32).

**5.** Dispositif de tension selon la revendication 1, caractérisé en ce que la vanne de régulation de pression (35) contient un clapet de non-retour (39).

**6.** Dispositif de tension selon la revendication 3, caractérisé en ce qu'un boulon de réglage (47), s'emboîtant dans la broche (44), est fixé tournant au centre de l'écrou de fermeture (46) et est réglable manuellement de l'extérieur.

**7.** Dispositif de tension selon la revendication 1, caractérisé en ce que la vanne de régulation de pression (35) est raccordée au circuit d'huile de lubrification du moteur à combustion interne.

**8.** Dispositif de tension selon la revendication 5, caractérisé en ce que la pression hydraulique est produite par une pompe qui peut être mise en marche par un contact électrique (18) placé dans l'élément de pression (3).

FIG.1

FIG.2

FIG.3